# FASCICULE DE BREVET EUROPEEN

(11) **EP 0 715 890 B1**
(45) Date de publication et mention de la délivrance du brevet: **22.09.1999**
(21) Numéro de dépôt: 95420339.4
(22) Date de dépôt: 01.12.1995
(51) Int. Cl.: B01J 37/34, B01J 31/24

(54) **Procédé de préparation électrochimique de Catalyseurs à base de métal de transition et de phosphine**
Verfahren für die elektrochemische Bereitung von Übergangsmetall und Phosphin enthaltende Katalysatoren
Electrochemical preparation process of transition metal and phosphine containing catalysts

(30) Priorité: 06.12.1994 FR 9414884
(43) Date de publication de la demande: 12.06.1996
(73) Titulaire: RHODIA FIBER & RESIN INTERMEDIATES, 92408 Courbevoie Cédex (FR)
(72) Inventeur: Chamard, Alex, F-69960 Corbas (FR); Horbez, Dominique, F-95130 Franconville (FR); Huser, Marc, F-69100 Villeurbanne (FR); Perron, Robert, F-69390 Charly (FR)
(74) Mandataire: Vignally, Noel

(56) Documents cités:
- EP-A- 0 354 845
- EP-A- 0 602 463
- FR-A- 2 080 556
- FR-A- 2 338 253

## Description

La présente invention concerne un procédé électrochimique de préparation de composés pouvant être utilisés comme catalyseurs.

Les composés visés par le procédé de l'invention comportent au moins un métal de transition au degré d'oxydation 0 ou 1 associé à au moins une phosphine sulfonée soluble dans l'eau.

De tels composés peuvent être utilisés par exemple comme catalyseurs dans la réaction d'hydrocyanation de composés éthyléniques, telle que décrite dans le brevet FR-A-2338253. Dans le présent texte, ils seront nommés catalyseurs sans que cela limite leur domaine d'utilisation.

Le procédé de préparation électrochimique des catalyseurs comportant au moins un métal de transition au degré d'oxydation 0 ou 1, associé à au moins une phosphine sulfonée, consiste à traiter par électrolyse une solution aqueuse contenant au moins un composé d'un métal de transition et une phosphine sulfonée, placée dans le compartiment cathodique d'une cellule d'électrolyse d'un électrolyseur.

La phosphine sulfonée mise en oeuvre dans le procédé de l'invention répond à la formule générale (I) 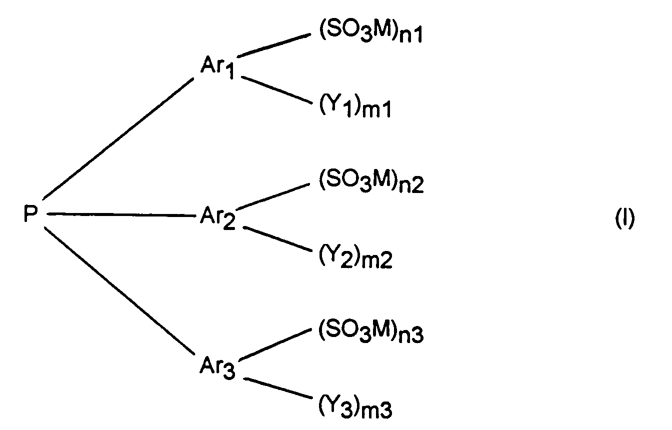 dans laquelle :
* Ar₁, Ar₂ et Ar₃, identiques ou différents, représentent des groupements aryles
* Y₁, Y₂ et Y₃, identiques ou différents, représentent
   . un radical alkyle ayant 1 à 4 atomes de carbone,
   . un radical alcoxy ayant 1 à 4 atomes de carbone,
   . un atome d'halogène,
   . un radical CN,
   . un radical NO₂
   . un radical OH,
   . un radical NR₁R₂, dans la formule duquel R₁ et R₂, identiques ou différents, représentent un radical alkyle ayant 1 à 4 atomes de carbone,
* M est un reste cationique minéral ou organique choisi, de manière à ce que le composé de formule (I) soit soluble dans l'eau, dans le groupe comprenant :
   . H⁺,
   . les cations dérivés des métaux alcalins ou alcalino-terreux,
   . N(R₃R₄R₅R₆)⁺ avec R₃,R₄,R₅ et R₆, identiques ou différents, représentant un radical alkyle ayant 1 à 4 atomes de carbone ou un atome d'hydrogène,
   . les autres cations dérivés des métaux dont les sels de l'acide benzènesulfonique sont solubles dans l'eau,
* m₁, m₂ et m₃ sont des nombres entiers, identiques ou différents, de 0 à 5,
* n₁, n₂ et n₃ sont des nombres entiers, identiques ou différents, de 0 à 3, l'un d'entre eux au moins étant égal ou supérieur à 1.

Comme exemples de métaux dont les sels de l'acide benzènesulfonique sont solubles dans l'eau, on peut citer le plomb, le zinc et l'étain.

Par l'expression soluble dans l'eau, on entend de manière générale dans le présent texte un composé soluble à au moins 0,01 g par litre d'eau.

Parmi les phosphines de formule (I), on préfère celles pour lesquelles :
- Ar₁, Ar₂ et Ar₃ sont des groupements phényle,
- Y₁, Y₂ et Y₃ représentent des groupements choisis parmi
   . les radicaux alkyle ayant de 1 à 2 atomes de carbone,
   . les radicaux alkoxy ayant de 1 à 2 atomes de carbone,
- M représente un cation choisi parmi le groupe comprenant
   . H⁺
   . les cations dérivés de Na, K, Ca, Ba
   . NH₄+
   . les cations tétraméthylammonium, tétraéthylammonium, tétrapropylammonium, tétrabutylammonium
- m₁, m₂ et m₃ sont des nombres entiers de 0 à 3
- n₁, n₂ et n₃ sont des nombres entiers de 0 à 3, l'un au moins étant également supérieur à 1.

Parmi ces phosphines, les plus particulièrement préférées sont les sels de sodium, de potassium, de calcium, de baryum, d'ammonium, de tétraméthylammonium et de tétraéthylammonium, des mono(sulfophényl) diphényl-phosphine, di(sulfophényl) phényl-phosphine et tri(sulfophényl)-phosphine dans les formules desquelles les groupements SO₃ sont de préférence en position méta.

On peut citer comme autres exemples de phosphines de formule (I) pouvant être mises en oeuvre dans le procédé de l'invention, les sels alcalins ou alcalino-terreux, les sels d'ammonium, les sels d'ammonium quaternaire des (sulfo-3 méthyl-4 phényl) di (méthyl-4 phényl)-phosphine ; (sulfo-3 méthoxy-4 phényl) di(méthoxy-4 phényl)-phosphine ; (sulfo-3 chloro-4 phényl) di(chloro-4 phényl)-phosphine ; di(sulfo-3 phényl) phényl-phosphine ; di(sulfo-4 phényl) phényl-phosphine ; di(sulfo-3 méthyl-4 phényl) (méthyl-4 phényl)-phosphine ; di(sulfo-3 méthoxy-4 phényl) (méthoxy-4 phényl) phosphine ; di(sulfo-3 chloro-4 phényl) (chloro-4 phényl) phosphine ; tri(sulfo-3 phényl)-phosphine ; tri(sulfo-4 phényl)-phosphine ; (tri(sulfo-3 méthyl-4 phényl)-phosphine ; tri(sulfo-3, méthoxy-4 phényl)-phosphine ; tri(sulfo-3 chloro-4 phényl)-phosphine ; (sulfo-2 méthyl-4 phényl) (sulfo-3, méthyl-4 phényl) (disulfo-3,5 méthyl-4 phényl)-phosphine ; (sulfo-3 phényl) (sulfo-3 chloro-4 phényl) (disulfo-3,5 chloro-4 phényl)-phosphine.

On peut bien évidemment utiliser un mélange de ces phosphines. En particulier, on peut utiliser un mélange de phosphines mono-, di- et tri-métasulfonées.

On utilise de préférence comme composés des métaux de transition des composés du nickel, du cobalt, du fer, du palladium, du platine, du rhodium et de l'iridium. On utilise des composés solubles dans l'eau ou capables de passer en solution dans les conditions de la réaction. Le reste lié au métal n'est pas critique, dès l'instant qu'il satisfait à ces conditions.

Parmi les composés précités, les composés les plus préférés sont ceux du nickel. On peut citer à titre d'exemples non limitatifs des composés tels que carboxylates (notamment acétate, formiate, citrate) de nickel, carbonate de nickel, bicarbonate de nickel, borate de nickel, bromure de nickel, chlorure de nickel, iodure de nickel, thiocyanate de nickel, cyanure de nickel, hydroxyde de nickel, hydrophosphite de nickel, phosphite de nickel, phosphate de nickel et dérivés, nitrate de nickel, sulfate de nickel, sulfite de nickel, aryl- et alkyl-sulfonates de nickel.

Il n'est pas nécessaire que le composé du nickel soit lui même soluble dans l'eau. Par exemple, le cyanure de nickel peu soluble dans l'eau se dissout très bien dans une solution aqueuse de phosphine sulfonée.

La cellule d'électrolyse de l'électrolyseur utilisée dans le présent procédé, comporte un compartiment cathodique et un compartiment anodique séparés par un élément séparateur.

La cathode de la cellule d'électrolyse peut être réalisée en un matériau tel que le platine, l'or, l'iridium, le ruthénium, le palladium, le nickel, le graphite, le carbone vitreux, le fer, un acier inoxydable, un acier spécial, le plomb, le mercure, un amalgame. Elle peut être constituée également par du titane, du tantale, du nickel ou d'un acier inoxydable, revêtu d'une couche de platine, d'or, d'iridium, de ruthénium, d'un mélange de plusieurs de ces métaux, d'oxydes de platine, de palladium, d'iridium, de rhodium, de ruthénium, d'osmium, de tantale ou d'un mélange de plusieurs de ces oxydes.

La cathode peut avoir une structure plane telle que plaque, grille ou une structure volumique ; elle peut notamment être trouée ou déployée. Comme types de structures volumiques, on peut utiliser des empilements granulaires des matériaux cités précédemment, des feutres ou des mousses de ces matériaux.

L'anode peut être réalisée en un matériau tel que le platine, l'or, l'iridium, le ruthénium, le palladium, le nickel, le graphite, le carbone vitreux, un acier inoxydable, un acier spécial, le plomb. Elle peut être constituée également par du titane ou du tantale revêtu d'une couche de platine, d'or, d'iridium, de ruthénium, d'un mélange de plusieurs de ces métaux, d'oxydes de platine, de palladium, d'iridium, de rhodium, de ruthénium, d'osmium, de tantale ou d'un mélange de plusieurs de ces oxydes.

La structure de l'anode peut être de différents types comme cela a été défini pour la cathode.

L'élément séparateur de la cellule d'électrolyse est constitué par une membrane échangeuse d'ions ou un diaphragme poreux.

Les membranes peuvent être du type cationique, notamment préparées à partir de résines échangeuses de cation possédant des groupes acides comme les groupes sulfoniques ou des groupes carboxyliques. De préférence, on utilisera les membranes préparées avec des résines sulfoniques. Comme membranes de cette sorte, on peut citer par exemple celles qui sont vendues sous les marques commerciales Nafion® (membranes sulfoniques perfluorées) ou Selemion®.

Les membranes peuvent aussi être de type anionique, mais les membranes cationiques sont généralement préférées, car elles présentent un certain nombre d'avantages. Elles sont notamment plus solides que les membranes anioniques et elles permettent également d'opérer avec des intensités de courant plus élevées.

Les diaphragmes poreux peuvent être notamment des diaphragmes en céramique poreuse, des diaphragmes en fibres synthétiques tissées ou non-tissées, des diaphragmes déposés à base de fibres d'amiante ou de fibres synthétiques.

L'élément séparateur peut être disposé en appui sur l'anode ou sur la cathode.

Comme indiqué précédemment, dans le compartiment cathodique se trouve la solution aqueuse comprenant la phosphine sulfonée et le composé du métal de transition. La concentration initiale en phosphine sulfonée se situe généralement entre 10⁻³ mole/litre et 1 mole/libre. La concentration initiale en composé du métal de transition, notamment en composé du nickel, se situe généralement entre 10⁻⁵ mole/litre et 1 mole/litre.

On peut rajouter dans le compartiment cathodique d'autres composés permettant d'augmenter la conductivité de l'électrolyte, tels que par exemple des sels solubles.

On peut également rajouter des agents complexants susceptibles de modifier le potentiel auquel est effectuée la réduction du métal de transition. Comme exemples de tels agents complexants, on peut citer les cyanures.

La solution du compartiment cathodique peut en outre comprendre des composés dont le rôle est de compléter le catalyseur préparé par le procédé de l'invention. Ces composés sont notamment des acides de Lewis.

Par acide de Lewis, on entend dans le présent texte, selon la définition usuelle, des composés accepteurs de doublets électroniques.

On peut mettre en oeuvre notamment les acides de Lewis cités dans l'ouvrage édité par G.A. OLAH "Friedel-Crafts and related Reactions", tome I, pages 191 à 197 (1963).

Les acides de Lewis qui peuvent être mis en oeuvre dans le compartiment cathodique sont choisis parmi les composés des éléments des groupes "Ib, IIb, IIIa, IIIb, IVa, IVb, Va, Vb, VIb, VIIb et VIII de la Classification périodique des éléments, dans la mesure où lesdits composés sont au moins partiellement solubles et stables dans l'eau ou plus généralement dans la solution aqueuse à traiter par électrolyse. Ces composés sont le plus souvent, mais de manière non limitative, des sels, notamment des halogénures, de préférence chlorures et bromures, des sulfates, des nitrates, des sulfonates, notamment des trifluorométhanesulfonates, des carboxylates, des acétylacétonates, des tétrafluoroborates et des phosphates.

A titre d'exemples non limitatifs de tels acides de Lewis, on peut citer le chlorure de zinc, le bromure de zinc, l'iodure de zinc, le trifluorométhanesulfonate de zinc, l'acétate de zinc, le nitrate de zinc, le tétrafluoroborate de zinc, le chlorure de manganèse, le bromure de manganèse, le chlorure de nickel, le bromure de nickel, le cyanure de nickel, l'acétylacétonate de nickel, le chlorure de cadmium, le bromure de cadmium, le chlorure stanneux, le bromure stanneux, le sulfate stanneux, le tartrate stanneux, les chlorures, bromures, sulfates, nitrates, carboxylates ou trifluorométhanesulfonates des éléments des terres rares comme le lanthane, le cérium, le praséodyme, le néodyme, le samarium, l'europium, le gadolinium, le terbium, le dysprosium, l'holmium, l'erbium, le thulium, l'ytterbium et le lutétium, le chlorure de cobalt, le chlorure ferreux, le chlorure d'yttrium.

On peut bien entendu mettre en oeuvre des mélanges de plusieurs acides de Lewis.

Parmi les acides de Lewis qui peuvent être utilisés, on peut citer tout particulièrement le chlorure de zinc, le bromure de zinc, le sulfate de zinc, le tétrafluoroborate de zinc, le chlorure stanneux, le bromure stanneux, les mélanges chlorure de zinc/chlorure stanneux, le chlorure de nickel, le bromure de nickel, l'acétylacétonate de nickel.

L'acide de Lewis mis en oeuvre représente généralement de 0 à 50 moles par mole de composé de métal de transition, plus particulièrement de composé du nickel, et de préférence de 0 à 10 moles par mole.

Le compartiment anodique contient une solution aqueuse d'un anolyte qui peut être constitué par un acide tel que notamment l'acide sulfurique, l'acide nitrique, les acides carboxyliques solubles dans l'eau comme l'acide acétique, par leurs sels notamment de sodium, de potassium, d'ammonium ou d'ammonium quaternaire ou par une base telle que notamment la soude ou la potasse. De préférence, l'anolyte sera choisi parmi l'acide sulfurique et ses sels, notamment le sulfate dipotassique, l'hydrogénosulfate de potassium, le sulfate disodique, l'hydrogénosulfate de sodium.

L'anolyte peut aussi être constitué par une ou plusieurs phosphines sulfonées définies précédemment.

La concentration initiale de l'anolyte dans la solution du compartiment anodique est généralement de 10⁻² mole/litre à 3 moles/litre.

Le courant électrique mis en oeuvre dans le procédé de l'invention est défini par son intensité et le potentiel à la cathode. Le potentiel peut être maintenu constant pendant la durée de l'électrolyse (potentiostatique). Une autre possibilité est de maintenir constante l'intensité (intensiostatique). En fonctionnement continu du procédé de l'invention, ces deux variantes sont équivalentes.

Lorsque l'on opère à potentiel constant, la valeur de celui-ci peut être facilement déterminée par l'homme du métier par le tracé de courbes intensité/potentiel.

La densité de courant peut atteindre 30 A/dm². Elle est ajustée en fonction de la quantité de métal de transition à réduire.

La température à laquelle on opère se situe généralement de 0°C à 95°C.

Une variante intéressante du procédé de l'invention consiste à régénérer un catalyseur usé, c'est-à-dire un catalyseur ayant servi et étant devenu au moins partiellement inactif. Ainsi, un catalyseur à base de phosphine sulfonée et d'un métal de transition au degré d'oxydation 0 ou 1, contenant aussi éventuellement un ou plusieurs acides de Lewis, utilisé dans la réaction d'hydrocyanation du butadiène et/ou de pentène-nitriles se désactive progressivement, en particulier par oxydation du métal de transition. Celui-ci, et plus particulièrement le nickel, est transformé au moins en partie en cyanure. En fin de réaction d'hydrocyanation, la phase aqueuse contenant notamment la phosphine sulfonée et le composé du métal de transition peut être aisément séparée de la phase organique. Cette phase aqueuse peut contenir des quantités relativement faibles de composés initialement introduits comme le butadiène et/ou les pentène-nitriles ou formés en cours de réaction comme l'adiponitrile, le méthyl-glutaronitrile, l'éthyl-succinonitrile, les pentène-nitriles, les méthylbutène-nitriles. La phase aqueuse est traitée électrochimiquement comme décrit précédemment afin de régénérer le catalyseur.

Les exemples qui suivent illustrent l'invention.

### EXEMPLES

### Appareillage utilisé.

La cellule d'électrolyse est composée d'un récipient cylindrique en verre ayant un volume utile d'environ 100 ml, dans lequel se trouve une cathode sous forme d'une grille en platine, un puits anodique cylindrique, placé à l'intérieur de la grille cathodique et comportant à base une membrane en résine de type Nafion 417® et dans lequel plonge l'anode sous forme de plaque de platine.

L'électrolyseur est relié à un potentiostat qui permet de maintenir le potentiel de la cathode à une valeur de -1,2 Volt par rapport à une électrode de référence Ag/AgCl.

### Abréviations utilisées :

TPPTS = sel de sodium de la triphénylphosphine trisulfonée
3PN = pentène-3 nitrile
ADN = adiponitrile
2M3 = méthyl-2 butène-3 nitrile
BD = butadiène
TT = taux de transformation
RT = sélectivité en un composé obtenu par rapport au composé de départ transformé
t.o. = turn-over = nombre de mmol de nitriles ou de dinitriles formés par mmol de Ni(0) engagé
COD = cyclo-octadiène.

### Exemples 1 à 5 - Synthèse de catalyseur Ni(0)/TPPTS par réduction électrochimique de Ni(CN)₂ dans une solution aqueuse de TPPTS.

On charge dans le compartiment cathodique 50 ml d'une solution aqueuse de cyanure de nickel (Ni(CN)₂ : 10,6 g/kg) et de TPPTS (300 g/kg d'eau).

Dans le compartiment anodique, on charge 20 ml d'anolyte (composition dans tableau 1 suivant). L'électrolyse est réalisée à 25°C au potentiel contrôlé de - 1,2 Volt. Des prélèvements sont régulièrement effectués afin de doser le Ni(II) restant par polarographie.

**Tableau 1**

| **Exemples** | **Anolyte** | **Durée (min)** | **TT Ni(CN)**_{**2**} **(%)** |
|---|---|---|---|
| **1** | TPPTS 0,6 M | 220 | 50 |
| **2** | KHSO₄ 1,5 M | 400 | 92 |
| **3** | K₂SO₄ saturé | 400 | 48 |
| **4** | K₂SO₄ saturé | 1350 | 75 |
| **5** | H₂SO₄ 0,1 N | 75 | 77 |

Tests (a, b, c et d) en hydrocyanation du pentène-3 nitrile des solutions **1, 2, 4 et 5** de catalyseurs générées électrochimiquement.

**Tableau 2**

| **Essais** | **Catalyseur** | **Ni(0) (mmol)** | **HCN (mmol/h)** | **RT**_{**ADN**} **(%)** | **t.o.** |
|---|---|---|---|---|---|
| **CE1 *** | Ni(COD)₂/TPPTS | 5 | 67,4 | 61 | 30 |
| **CE2 **** | Ni(CN)₂(TPPTS)₂ | 0 | 67,4 | 0 | 0 |
| **a** | solution **1** | 3 | 55,7 | 64 | 38 |
| **b** | solution **2** | 3,8 | 50,5 | 63 | 37 |
| **c** | solution 4 | 3,2 | 54,7 | 63 | 35 |
| **d** | solution 5 | 2,9 | 39,1 | 61 | 37 |

Conditions opératoires des tests d'hydrocyanation :
- 3PN : 320 mmol ; ZnCl₂ : 20 mmol ; 65°C ; 3 h.
   CE1 * = essai comparatif avec un catalyseur préparé par échange des ligands COD de Ni(COD)₂ par la TPPTS,
   CE2 ** = essai comparatif avec une solution de Ni(CN)₂(TPPTS)₂ non traitée électrochimiquement.

Test (e) en hydrocyanation du butadiène de la solution 1 de catalyseur générée électrochimiquement.

**Tableau 3**

| **Essais** | **Catalyseur** | **BD (mmol)** | **Ni(0) (mmol)** | **HCN (mmol/h)** | **RT**_{**3PN +**} _{**2M3**}**(%)** | **t.o.** |
|---|---|---|---|---|---|---|
| **CE3 *** | Ni(COD)₂/TPPTS | 400 | 5,5 | 350 | 97 | 70 |
| **CE4 **** | Ni(CN)₂(TPPTS)₂ | 400 | 0 | 350 | 0 | 0 |
| **e** | solution **1** | 530 | 4 | 386 | 90 | 60 |

Conditions opératoires des tests d'hydrocyanation :
- TPPTS : 25 mmol, 90°C, 1,2 h.
   CE3 * = essai comparatif avec un catalyseur préparé par échange des ligands COD de Ni(COD)₂ par la TPPTS,
   CE4 ** = essai comparatif avec une solution de Ni(CN)₂(TPPTS)₂ non traitée par électroréduction.

### Exemple 6 - Synthèse de catalyseur Ni(0)/TPPTS par réduction de NiCl₂ dans une solution aqueuse de TPPTS.

On charge dans le compartiment cathodique 50 ml d'une solution aqueuse de chlorure de nickel (NiCl₂ : 17,4 g/kg), de TPPTS (300 g/kg d'eau) et de cyanure de sodium (NaCN : 6,6 g/kg).

Dans le compartiment anodique, on charge 20 ml d'une solution aqueuse de K₂SO₄ saturée. L'électrolyse est réalisée à 25°C au potentiel contrôlé de - 1,2 Volt. Des prélèvements sont régulièrement effectués afin de doser le Ni(II) restant par polarographie.

| **Exemple** | **Anolyte** | **Durée (min)** | **TT Ni(II) (%)** |
|---|---|---|---|
| **6** | K2SO4 saturée | 1000 | 80 |

Test (f) en hydrocyanation du 3PN de la solution 6 du catalyseur régénéré électrochimiquement.

| **Essais** | **Catalyseur** | **Ni(0) (mmol)** | **HCN (mmol/h)** | **RT**_{**ADN**} **(%)** | **t.o.** |
|---|---|---|---|---|---|
| **f** | solution 6 | 4,45 | 57,5 | 59 | 25 |

### Exemple 7 - Régénération d'une solution aqueuse de Ni/TPPTS issue de l'hydrocyanation du pentène-3 nitrile.

a) On place dans un réacteur en verre de 150 ml, agité par une turbine :
   - 38 ml de solution aqueuse renfermant 5 mmol de nickel (0), 20 mmol de TPPTS et 20 mmol de chlorure de zinc,
   - 32,4 ml de 3PN (320 mmol).

   On chauffe le tout à 65°C et on injecte l'acide cyanhydrique pur (condensé à -10°C) à un débit de 67 mmol/h pendant 3,5 h. Après refroidissement, dégazage et décantation, on sépare les deux phases. La phase organique est dosée par Chromatographie en phase gazeuse (CPG) :
   - pentène-3 nitrile : 177 mmol
   - éthylsuccinonitrile : 13 mmol
   - méthylglutaronitrile : 35 mmol
   - adiponitrile : 92 mmol
   soient 28 mmol de dinitriles formés par mmol de nickel.
b) La phase aqueuse complètement inactive est électrolysée à un potentiel de -1,2 Volt par rapport à une électrode de référence Ag/AgCl pendant 3 h.
c) On replace dans le réacteur:
   - 29 ml de la solution aqueuse de catalyseur ainsi régénérée,
   - 10 mmol de ZnCl₂,
   - 32,4 ml de 3PN (320 mmol).

On chauffe le tout à 65°C et on injecte l'acide cyanhydrique à un débit de 34 mmol/h pendant 6 h. Après refroidissemnt et dégazage, on dose par CPG les différents nitriles :
- pentène-3 nitrile : 183 mmol
- éthylsuccinonitrile : 14 mmol
- méthylglutaronitrile : 39 mmol
- adiponitrile : 78 mmol.
soient 32 mmol de dinitriles formés par mmol de nickel.

Ces résultats indiquent que le catalyseur est parfaitement régénéré.

## Revendications

1. Procédé de préparation électrochimique de catalyseurs comportant au moins un métal de transition au degré d'oxydation 0 ou 1, associé à au moins une phosphine sulfonée, caractérisé en ce qu'il consiste à traiter par électrolyse une solution aqueuse contenant au moins un composé d'un métal de transition et une phosphine sulfonée, placée dans le compartiment cathodique d'une cellule d'électrolyse d'un électrolyseur.

2. Procédé selon la revendication 1, caractérisé en ce que la cellule d'électrolyse de l'électrolyseur comporte un compartiment cathodique et un compartiment anodique séparés par un élément séparateur constitué par une membrane échangeuse d'ions ou un diaphragme poreux.

3. Procédé selon l'une des revendications 1 ou 2, caractérisé en ce que la cathode de la cellule d'électrolyse est en un matériau tel que le platine, l'or, l'iridium, le ruthénium, le palladium, le nickel, le graphite, le carbone vitreux, le fer, un acier inoxydable, un acier spécial, le plomb, le mercure, un amalgame ou être constituée par du titane, du tantale, du nickel ou d'un acier inoxydable, revêtu d'une couche de platine, d'or, d'iridium, de ruthénium, d'un mélange de plusieurs de ces métaux, d'oxydes de platine, de palladium, d'iridium, de rhodium, de ruthénium, d'osmium, de tantale ou d'un mélange de plusieurs de ces oxydes.

4. Procédé selon l'une des revendications 1 à 3, caractérisé en ce que la cathode et l'anode de la cellule d'électrolyse ont une structure plane telle que plaque, grille ou une structure volumique et qu'elles sont trouées ou déployées.

5. Procédé selon l'une des revendications 1 à 4, caractérisé en ce que la cathode ou l'anode a une structure volumique choisie parmi les empilements granulaires des matériaux qui la constituent, les feutres ou les mousses de cesdits matériaux.

6. Procédé selon l'une des revendications 1 à 5, caractérisé en ce que l'anode est un matériau tel que le platine, l'or, l'iridium, le ruthénium, le palladium, le nickel, le graphite, le carbone vitreux, un acier inoxydable, un acier spécial, le plomb ou être constituée par du titane ou du tantale revêtu d'une couche de platine, d'or, d'iridium, de ruthénium, d'un mélange de plusieurs de ces métaux, d'oxydes de platine, de palladium, d'iridium, de rhodium, de ruthénium, d'osmium, de tantale ou d'un mélange de plusieurs de ces oxydes.

7. Procédé selon l'une des revendications 1 à 6, caractérisé en ce que l'élément séparateur est choisi parmi les membranes de type cationique, préparées à partir de résines échangeuses de cation possédant des groupes acides comme les groupes sulfoniques ou des groupes carboxyliques et de préférence parmi les membranes préparées avec des résines sulfoniques.

8. Procédé selon l'une des revendications 1 à 6, caractérisé en ce que l'élément séparateur est choisi parmi les diaphragmes en céramique poreuse, les diaphragmes en fibres synthétiques tissées ou non-tissées, les diaphragmes déposés à base de fibres d'amiante ou de fibres synthétiques.

9. Procédé selon l'une des revendications 1 à 8, caractérisé en ce que la phosphine sulfonée mise en oeuvre répond à la formule générale (I) : 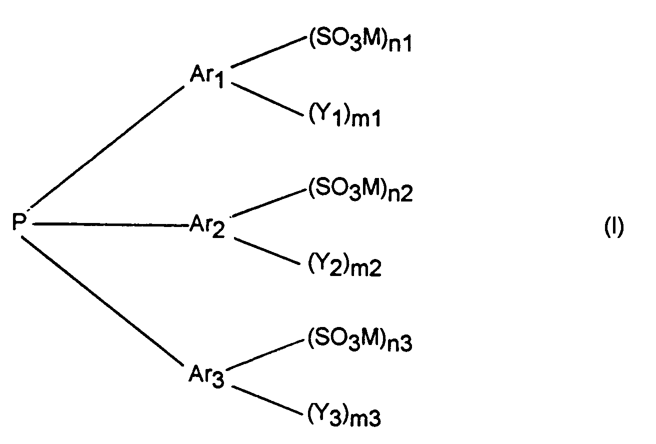 dans laquelle :
* Ar₁, Ar₂ et Ar₃, identiques ou différents, représentent des groupements aryles
* Y₁, Y₂ et Y₃, identiques ou différents, représentent
. un radical alkyle ayant 1 à 4 atomes de carbone,
. un radical alcoxy ayant 1 à 4 atomes de carbone,
. un atome d'halogène,
. un radical CN,
. un radical NO₂
. un radical OH,
. un radical NR₁R₂, dans la formule duquel R₁ et R₂, identiques ou différents, représentent un radical alkyle ayant 1 à 4 atomes de carbone,
* M est un reste cationique minéral ou organique choisi, de manière à ce que le composé de formule (I) soit soluble dans l'eau, dans le groupe comprenant :
. H⁺,
. les cations dérivés des métaux alcalins ou alcalino-terreux,
. N(R₃R₄R₅R₆)⁺ avec R₃,R₄,R₅ et R₆, identiques ou différents, représentant un radical alkyle ayant 1 à 4 atomes de carbone ou un atome d'hydrogène,
. les autres cations dérivés des métaux dont les sels de l'acide benzènesulfonique sont solubles dans l'eau,
* m₁, m₂ et m₃ sont des nombres entiers, identiques ou différents, de 0 à 5,
* n₁, n₂ et n₃ sont des nombres entiers, identiques ou différents, de 0 à 3, l'un d'entre eux au moins étant égal ou supérieur à 1.

10. Procédé selon la revendication 9, caractérisé en ce que la phosphine sulfonée mise en oeuvre répond à la formule (I), dans laquelle :
- Aᵣ₁, Ar₂ et Ar₃ sont des groupements phényle,
- Y₁, Y₂ et Y₃ représentent des groupements choisis parmi
. les radicaux alkyle ayant de 1 à 2 atomes de carbone,
. les radicaux alkoxy ayant de 1 à 2 atomes de carbone,
- M représente un cation choisi parmi le groupe comprenant
. H⁺
. les cations dérivés de Na, K, Ca, Ba
. NH₄+
. les cations tétraméthylammonium, tétraéthylammonium, tétrapropylammonium, tétrabutylammonium
- m₁, m₂ et m₃ sont des nombres entiers de 0 à 3
- n₁, n₂ et n₃ sont des nombres entiers de 0 à 3, l'un au moins étant également supérieur à 1.

11. Procédé selon l'une des revendications 1 à 10, caractérisé en ce que la phosphine sulfonée mise en oeuvre est choisie parmi les sels de sodium, de potassium, de calcium, de baryum, d'ammonium, de tétraméthylammonium et de tétraéthylammonium, des mono(sulfophényl) diphényl-phosphine, di(sulfophényl) phényl-phosphine et tri(sulfophényl)-phosphine dans les formules desquelles les groupements SO₃ sont de préférence en position méta.

12. Procédé selon l'une des revendications 1 à 11, caractérisé en ce que le composé de métal de transition est choisi parmi les composés du nickel, du cobalt, du fer, du palladium, du platine, du rhodium et de l'iridium, solubles dans l'eau ou capables de passer en solution dans les conditions de la réaction.

13. Procédé selon l'une des revendications 1 à 12, caractérisé en ce que le composé de métal de transition est choisi parmi les composés du nickel tels que les carboxylates, notamment acétate, formiate, citrate, de nickel, carbonate de nickel, bicarbonate de nickel, borate de nickel, bromure de nickel, chlorure de nickel, iodure de nickel, thiocyanate de nickel, cyanure de nickel, hydroxyde de nickel, hydrophosphite de nickel, phosphite de nickel, phosphate de nickel et ses dérivés, nitrate de nickel, sulfate de nickel, sulfite de nickel, aryl- et alkyl-sulfonates de nickel.

14. Procédé selon l'une des revendications 1 à 13, caractérisé en ce que dans le compartiment cathodique la concentration initiale en phosphine sulfonée se situe entre 10⁻³ mole/litre et 1 mole/litre et la concentration initiale en composé du métal de transition, notamment en composé du nickel, se situe entre 10⁻⁵ mole/litre et 1 mole/litre.

15. Procédé selon l'une des revendications 1 à 14, caractérisé en ce que le compartiment cathodique comporte d'autres composés permettant d'augmenter la conductivité de l'électrolyte tels que des sels solubles, des agents complexants susceptibles de modifier le potentiel auquel est effectuée la réduction du métal de transition tels que les cyanures et des acides de Lewis.

16. Procédé selon la revendication 15, caractérisé en ce que l'acide de Lewis mis en oeuvre dans le compartiment cathodique est choisi parmi les composés des éléments des groupes Ib, IIb, IIIa, IIIb, IVa, IVb, Va, Vb, VIb, VIIb et VIII de la Classification périodique des éléments, dans la mesure où lesdits composés sont au moins partiellement solubles et stables dans l'eau ou plus généralement dans la solution aqueuse à traiter par électrolyse, de préférence parmi les sels, notamment les halogénures, de préférence chlorures et bromures, les sulfates, les nitrates, les sulfonates, notamment les trifluorométhanesulfonates, les carboxylates, les acétylacétonates, les tétrafluoroborates et les phosphates.

17. Procédé selon l'une des revendications 15 ou 16, caractérisé en ce que racide de Lewis est choisi parmi le chlorure de zinc, le bromure de zinc, l'iodure de zinc, le trifluorométhanesulfonate de zinc, l'acétate de zinc, le nitrate de zinc, le tétrafluoroborate de zinc, le chlorure de manganèse, le bromure de manganèse, le chlorure de nickel, le bromure de nickel, le cyanure de nickel, l'acétylacétonate de nickel, le chlorure de cadmium, le bromure de cadmium, le chlorure stanneux, le bromure stanneux, le sulfate stanneux, le tartrate stanneux, les chlorures, bromures, sulfates, nitrates, carboxylates ou trifluorométhanesulfonates des éléments des terres rares comme le lanthane, le cérium, le praséodyme, le néodyme, le samarium, l'europium, le gadolinium, le terbium, le dysprosium, l'holmium, l'erbium, le thulium, l'ytterbium et le lutétium, le chlorure de cobalt, le chlorure ferreux, le chlorure d'yttrium.

18. Procédé selon l'une des revendications 15 à 17, caractérisé en ce que l'acide de Lewis est choisi parmi le chlorure de zinc, le bromure de zinc, le sulfate de zinc, le tétrafluoroborate de zinc, le chlorure stanneux, le bromure stanneux, les mélanges chlorure de zinc/chlorure stanneux, le chlorure de nickel, le bromure de nickel, l'acétylacétonate de nickel.

19. Procédé selon l'une des revendications 15 à 18, caractérisé en ce que l'acide de Lewis représente de 0 à 50 moles par mole de composé de métal de transition, plus particulièrement de composé du nickel, et de préférence de 0 à 10 moles par mole.

20. Procédé selon l'une des revendications 1 à 19, caractérisé en ce que le compartiment anodique contient une solution aqueuse d'un anolyte constitué par un acide tel que notamment l'acide sulfurique, l'acide nitrique, les acides carboxyliques solubles dans l'eau comme l'acide acétique, par les sels correspondants tels que de sodium, de potassium, d'ammonium ou d'ammonium quaternaire ou par une base telle que la soude ou la potasse, de préférence l'anolyte étant choisi parmi l'acide sulfurique et ses sels.

21. Procédé selon l'une des revendications 1 à 19, caractérisé en ce que le compartiment anodique contient une solution aqueuse d'un anolyte constitué par une ou plusieurs phosphines sulfonées.

22. Procédé selon l'une des revendications 1 à 21, caractérisé en ce que la concentration initiale de l'anolyte dans la solution du compartiment anodique est de 10⁻² mole/litre à 3 moles/litre.

23. Procédé selon l'une des revendications 1 à 22, caractérisé en ce qu'il consiste à mettre en oeuvre dans le compartiment cathodique une solution aqueuse d'un catalyseur usé, à base de phosphine sulfonée et d'un métal de transition, et plus particulièrement le nickel, transformé au moins en partie en cyanure, ledit catalyseur usé contenant aussi éventuellement un ou plusieurs acides de Lewis, et ladite solution pouvant contenir des quantités relativement faibles de composés comme le butadiène et/ou les pentène-nitriles ou comme l'adiponitrile, le méthyl-glutaronitrile, l'éthylsuccinonitrile, les méthylbutène-nitriles.

## Claims

1. Process for the electrochemical synthesis preparation of catalysts containing at least one transition metal having an oxidation number of 0 or 1, combined with at least one sulphonated phosphine, characterized in that it consists in electrolytically treating an aqueous solution containing at least one compound of a transition metal and a sulphonated phosphine, placed in the cathode compartment of an electrolysis cell of an electrolyser.

2. Process according to Claim 1, characterized in that the electrolysis cell of the electrolyser comprises a cathode compartment and an anode compartment which are separated by a separator element consisting of an ion-exchange membrane or a porous diaphragm.

3. Process according to either of Claims 1 and 2, characterized in that the cathode of the electrolysis cell is made of a material such as platinum, gold, iridium, ruthenium, palladium, nickel, graphite, vitreous carbon, iron, a stainless steel, a special steel, lead, mercury or an amalgam or consists of titanium, of tantalum, of nickel or of a stainless steel, coated with a layer of platinum, of gold, of iridium, of ruthenium, of a mixture of several of these metals, of platinum, palladium, iridium, rhodium, ruthenium, osmium or tantalum oxides or of a mixture of several of these oxides.

4. Process according to one of Claims 1 to 3, characterized in that the cathode and the anode of the electrolysis cell have a plane structure, such as a plate or grid, or a voluminal structure and that they are perforated or opened out.

5. Process according to one of Claims 1 to 4, characterized in that the cathode or the anode has a voluminal structure chosen from granular stacks of the materials of which it is composed, felts or foams of these said materials.

6. Process according to one of Claims 1 to 5, characterized in that the anode is a material such as platinum, gold, iridium, ruthenium, palladium, nickel, graphite, vitreous carbon, a stainless steel, a special steel, or lead or consists of titanium or of tantalum coated with a layer of platinum, of gold, of iridium, of ruthenium, of a mixture of several of these metals, of platinum, palladium, iridium, rhodium, ruthenium, osmium or tantalum oxides or of a mixture of several of these oxides.

7. Process according to one of Claims 1 to 6, characterized in that the separator element is chosen from cationic-type membranes prepared from cation-exchange resins possessing acid groups such as sulphonic groups or carboxylic groups, or preferably from membranes prepared with sulphonic resins.

8. Process according to one of Claims 1 to 6, characterized in that the separator element is chosen from diaphragms made of porous ceramic, diaphragms made of woven or non-woven synthetic fibres, or deposited diaphragms based on asbestos fibres or on synthetic fibres.

9. Process according to one of Claims 1 to 8, characterized in that the sulphonated phosphine employed satisfies the general formula (I): 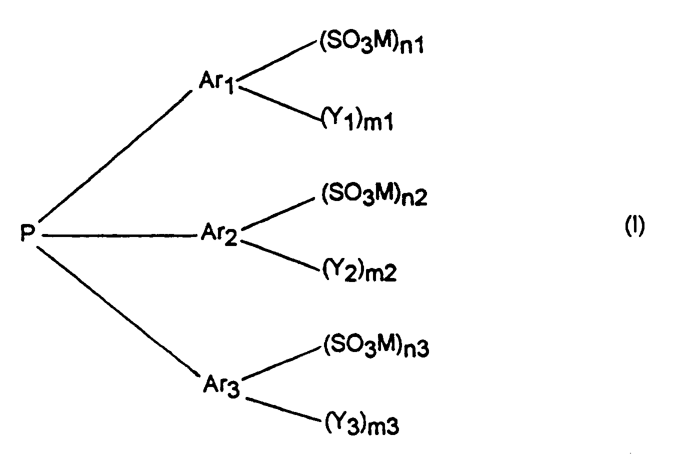 in which:
* Ar₁, Ar₂ and Ar₃, which may be the same or different, represent aryl groups;
* Y₁, Y₂ and Y₃, which may be the same or different, represent
. an alkyl radical having 1 to 4 carbon atoms,
. an alkoxy radical having 1 to 4 carbon atoms,
. a halogen atom,
. a CN radical,
. an NO₂ radical,
. an OH radical,
. an NR₁R₂ radical, in the formula, in which R₁ and R₂, which may be the same or different, represent an alkyl radical having 1 to 4 carbon atoms;
* M is an inorganic or organic cationic residue chosen, so that the compound of formula (I) is soluble in water, from the group including:
. H⁺,
. cations derived from alkali metals or alkaline-earth metals,
. N(R₃R₄R₅R₆)⁺ with R₃, R₄, R₅ and R₆, which may be the same or different, representing an alkyl radical having 1 to 4 carbon atoms or a hydrogen atom,
. other cations derived from metals whose salts from benzenesulphonic acid are soluble in water;
* m₁, m₂ and m₃ are integers, which may be the same or different, ranging from 0 to 5,
* n₁, n₂ and n₃ are integers, which may be the same or different, ranging from 0 to 3, one of them at least being equal to or greater than 1.

10. Process according to Claim 9, characterized in that the sulphonated phosphine employed satisfies the formula (I), in which:
- Ar₁, Ar₂ and Ar₃ are phenyl groups;
- Y₁, Y₂ and Y₃ represent groups chosen from
. alkyl radicals having from 1 to 2 carbon atoms,
. alkoxy radicals having from 1 to 2 carbon atoms;
- M represents a cation chosen from the group including:
. H⁺,
. cations derived from Na, K, Ca, Ba,
. NH₄⁺,
. tetramethylammonium, tetraethylammonium, tetrapropylammonium or tetrabutylammonium cations;
- m₁, m₂ and m₃ are integers ranging from 0 to 3;
- n₁, n₂ and n₃ are integers ranging from 0 to 3, one at least also being greater than 1.

11. Process according to one of Claims 1 to 10, characterized in that the sulphonated phosphine employed is chosen from the sodium, potassium, calcium, barium, ammonium, tetramethylammonium and tetraethylammonium salts of mono(sulphophenyl)diphenylphosphine, di(sulphophenyl)phenylphosphine and tri(sulphophenyl)phosphine, in the formulae of which the SO₃ groups are preferably in the meta position.

12. Process according to one of Claims 1 to 11, characterized in that the transition-metal compound is chosen from nickel, cobalt, iron, palladium, platinum, rhodium and iridium compounds which are soluble in water or capable of passing into solution under the reaction conditions.

13. Process according to one of Claims 1 to 12, characterized in that the transition-metal compound is chosen from nickel compounds such as nickel carboxylates, especially nickel acetate, formate and citrate, nickel carbonate, nickel bicarbonate, nickel borate, nickel bromide, nickel chloride, nickel iodide, nickel thiocyanate, nickel cyanide, nickel hydroxide, nickel hydrophosphite, nickel phosphite, nickel phosphate and its derivatives, nickel nitrate, nickel sulphate, nickel sulphite, nickel arylsulphonates and nickel alkylsulphonates.

14. Process according to one of Claims 1 to 13, characterized in that in the cathode compartment the initial concentration of sulphonated phosphine lies between 10⁻³ mol/litre and 1 mol/litre and the initial concentration of transition-metal compound, especially of nickel compound, lies between 10⁻⁵ mol/litre and 1 mol/litre.

15. Process according to one of Claims 1 to 14, characterized in that the cathode compartment contains other compounds enabling the conductivity of the electrolyte to be increased, such as soluble salts, complexing agents capable of modifying the potential at which the reduction of the transition metal takes place, such as cyanides and Lewis acids.

16. Process according to Claim 15, characterized in that the Lewis acid employed in the cathode compartment is chosen from compounds of elements in Groups Ib, IIb, IIIa, IIIb, IVa, IVb, Va, Vb, VIb, VIIb and VIII of the Periodic Table of the Elements, insofar as the said compounds are at least partially soluble and stable in water or, more generally, in the aqueous solution to be electrolytically treated, preferably chosen from salts, especially halides, preferably chlorides and bromides, sulphates, nitrates, sulphonates, especially trifluoromethanesulphonates, carboxylates, acetylacetonates, tetrafluoroborates and phosphates.

17. Process according to either of Claims 15 and 16, characterized in that the Lewis acid is chosen from zinc chloride, zinc bromide, zinc iodide, zinc trifluoromethanesulphonate, zinc acetate, zinc nitrate, zinc tetrafluoroborate, manganese chloride, manganese bromide, nickel chloride, nickel bromide, nickel cyanide, nickel acetylacetonate, cadmium chloride, cadmium bromide, stannous chloride, stannous bromide, stannous sulphate, stannous tartrate, chlorides, bromides, sulphates, nitrates, carboxylates or trifluoromethanesulphonates of the rare-earth elements such as lanthanum, cerium, praseodymium, neodymium, samarium, europium, gadolinium, terbium, dysprosium, holmium, erbium, thulium, ytterbium and lutetium, cobalt chloride, ferrous chloride and yttrium chloride.

18. Process according to one of Claims 15 to 17, characterized in that the Lewis acid is chosen from zinc chloride, zinc bromide, zinc sulphate, zinc tetrafluoroborate, stannous chloride, stannous bromide, zinc chloride/stannous chloride mixtures, nickel chloride, nickel bromide and nickel acetylacetonate.

19. Process according to one of Claims 15 to 18, characterized in that the Lewis acid represents from 0 to 50 mol per mole of transition-metal compound, more particularly of nickel compound, and preferably from 0 to 10 mol per mole.

20. Process according to one of Claims 1 to 19, characterized in that the anode compartment contains an aqueous solution of an anolyte consisting of an acid such as especially sulphuric acid, nitric acid, water-soluble carboxylic acids such as acetic acid, of the corresponding salts such as sodium, potassium, ammonium or quaternary ammonium salts, or of a base such as sodium hydroxide or potassium hydroxide, the anolyte preferably being chosen from sulphuric acid and its salts.

21. Process according to one of Claims 1 to 19, characterized in that the anode compartment contains an aqueous solution of an anolyte consisting of one or more sulphonated phosphines.

22. Process according to one of Claims 1 to 21, characterized in that the initial concentration of the anolyte in the solution in the anode compartment is from 10⁻² mol/litre to 3 mol/litre.

23. Process according to one of Claims 1 to 22, characterized in that it consists in employing, in the cathode compartment, an aqueous solution of a spent catalyst, based on a sulphonated phosphine and on a transition metal, and more particularly nickel, converted at least partly into a cyanide, the said spent catalyst also containing, optionally, one or more Lewis acids, and it being possible for the said solution to contain relatively small amounts of compounds such as butadiene and/or pentenenitriles or such as adiponitrile, methylglutaronitrile, ethylsuccinonitrile or methylbutenenitriles.

## Patentansprüche

1. Verfahren zur elektrochemischen Herstellung von Katalysatoren, die mindestens ein Übergangsmetall mit dem Oxidationsgrad 0 oder 1, assoziiert mit mindestens einem sulfonierten Phosphin enthalten, dadurch gekennzeichnet, daß es darin besteht, eine wäßrige Lösung, die mindestens eine Verbindung eines Übergangsmetalles und ein sulfoniertes Phosphin enthält und die sich im Kathodenraum einer Elektrolysezelle von einer Elektrolyse-Anlage befindet, durch Elektrolyse zu behandeln.

2. Verfahren nach Anspruch 1, dadurch gekennzeichnet, daß die Elektrolysezelle der Elektrolyse-Anlage einen Kathodenraum und einen Anodenraum umfaßt, die durch ein Trennelement, bestehend aus einer Ionenaustausch-Membran oder einem porösen Diaphragma, voneinander getrennt sind.

3. Verfahren nach Anspruch 1 oder 2, dadurch gekennzeichnet, daß die Kathode der Elektrolysezelle aus einem Material wie Platin, Gold, Iridium, Ruthenium, Palladium, Nickel, Graphit, Glaskohle, Eisen, einem rostfreien Stahl, einem Spezialstahl, Blei, Quecksilber, einem Amalgam besteht oder gebildet wird durch Titan, Tantal, Nickel oder einem rostfreien Stahl, umhüllt mit einer Schicht von Platin, Gold, Iridium, Ruthenium, einer Mischung von mehreren dieser Metalle, von Oxiden von Platin, Palladium, Iridium, Rhodium, Ruthenium, Osmium, Tantal oder einer Mischung von mehreren dieser Oxide.

4. Verfahren nach Anspruch 1 bis 3, dadurch gekennzeichnet, daß die Kathode und die Anode der Elektrolysezelle eine flache Struktur wie eine Platte, ein Gitter oder eine räumliche Struktur besitzen und daß sie durchlöchert oder ausgebreitet sind.

5. Verfahren nach einem der Ansprüche 1 bis 4, dadurch gekennzeichnet, daß die Kathode oder die Anode eine räumliche Struktur besitzen, ausgewählt unter den körnigen Stapeln der Materialien, aus denen sie bestehen, Filzen oder Schäumen dieser genannten Materialien.

6. Verfahren nach einem der Ansprüche 1 bis 5, dadurch gekennzeichnet, daß die Anode aus einem Material wie Platin, Gold, Iridium, Ruthenium, Palladium, Nickel, Graphit, Glaskohle, einem rostfreien Stahl, einem Spezialstahl, Blei besteht oder gebildet wird durch Titan oder Tantal, umhüllt mit einer Schicht von Platin, Gold, Iridium, Ruthenium, einer Mischung von mehreren dieser Metalle, von Oxiden von Platin, Palladium, Iridium, Rhodium, Ruthenium, Osmium, Tantal oder einer Mischung von mehreren dieser Oxide.

7. Verfahren nach einem der Ansprüche 1 bis 6, dadurch gekennzeichnet, daß das Trennelement unter den Membranen vom kationischen Typ, hergestellt ausgehend von Kationenaustauscherharzen, die saure Gruppen wie sulfonische Gruppen oder carboxylische Gruppen besitzen, und vorzugsweise unter den Membranen, die mit sulfonischen Harzen hergestellt wurden, ausgewählt wird.

8. Verfahren nach einem der Ansprüche 1 bis 6, dadurch gekennzeichnet, daß das Trennelement unter den Diaphragmen aus poröser Keramik, den Diaphragmen aus gewebten oder nicht gewebten synthetischen Fasern, den abgesetzten Diaphragmen auf der Basis von Asbestfasern oder synthetischen Fasern ausgewählt wird.

9. Verfahren nach einem der Ansprüche 1 bis 8, dadurch gekennzeichnet, daß das eingesetzte sulfonierte Phosphin der allgemeinen Formel (I) 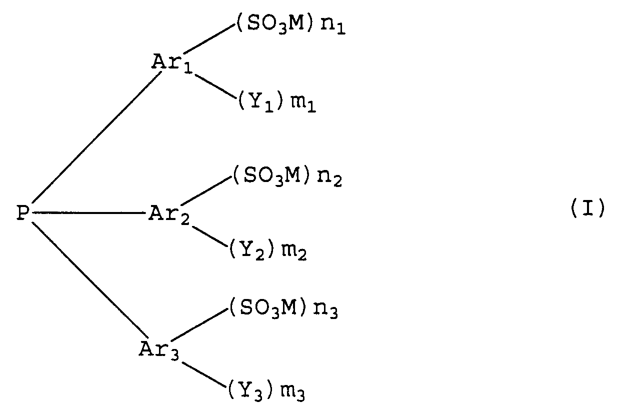 entspricht, in der
* Ar₁, Ar₂ und Ar₃, gleich oder verschieden, Gruppen Aryl darstellen,
* Y₁, Y₂ und Y₃, gleich oder verschieden, darstellen:
. einen Rest Alkyl mit 1 bis 4 Kohlenstoffatomen,
. einen Rest Alkoxy mit 1 bis 4 Kohlenstoffatomen,
. ein Halogenatom,
. einen Rest CN,
. einen Rest NO₂,
. einen Rest OH,
. einen Rest NR₁R₂, worin R₁ und R₂, gleich oder verschieden, einen Rest Alkyl mit 1 bis 4 Kohlenstoffatomen bedeuten,
* M ein mineralischer oder organischer kationischer Rest ist, in der Weise gewählt, daß die Verbindung der Formel (I) in Wasser löslich ist, und aus der Gruppe, die umfaßt:
. H⁺,
. die von Alkalimetallen oder Erdalkalimetallen abgeleiteten Kationen,
. N(R₃R₄R₅R₆)⁺, worin R₃, R₄, R₅ und R₆, gleich oder verschieden, einen Rest Alkyl mit 1 bis 4 Kohlenstoffatomen oder ein Wasserstoffatom bedeuten,
. die anderen Kationen, abgeleitet von Metallen, deren Salze der Benzolsulfonsäure in Wasser löslich sind,
* m₁, m₂ und m₃ gleiche oder verschiedene, ganze Zahlen von 0 bis 5 sind,
* n₁, n₂ und n₃ gleiche oder verschiedene, ganze Zahlen von 0 bis 3 sind, wobei eines von ihnen mindestens gleich oder höher als 1 ist.

10. Verfahren nach Anspruch 9, dadurch gekennzeichnet, daß das eingesetzte sulfonierte Phosphin der allgemeinen Formel (I) entspricht, in der
* Ar₁, Ar₂ und Ar₃ Gruppen Phenyl darstellen,
* Y₁, Y₂ und Y₃ Gruppen darstellen, ausgewählt unter:
. den Resten Alkyl mit 1 bis 2 Kohlenstoffatomen,
. den Resten Alkoxy mit 1 bis 2 Kohlenstoffatomen,
* M ein Kation darstellt, gewählt aus der Gruppe, die umfaßt:
. H⁺,
. die von Na, K, Ca, Ba abgeleiteten Kationen,
. NH₄⁺,
. die Kationen Tetramethylammonium, Tetraethylammonium, Tetrapropylammonium, Tetrabutylammonium,
* m₁, m₂ und m₃ ganze Zahlen von 0 bis 3 sind,
* n₁, n₂ und n₃ ganze Zahlen von 0 bis 3 sind, wobei mindestens eines höher als 1 ist.

11. Verfahren nach einem der Ansprüche 1 bis 10, dadurch gekennzeichnet, daß das eingesetzte sulfonierte Phosphin unter den Salzen von Natrium, Kalium, Calcium, Barium, Ammonium, Tetramethylammonium und Tetraethylammonium von Mono-(sulfophenyl)-diphenyl-phosphin, Di-(sulfophenyl)-phenyl-phosphin und Tri-(sulfophenyl)-phosphin ausgewählt wird, wobei sich in den Formeln die Gruppen SO₃ vorzugsweise in Position meta befinden.

12. Verfahren nach einem der Ansprüche 1 bis 11, dadurch gekennzeichnet, daß die Verbindung des Übergangsmetalles unter den Verbindungen von Nickel, Cobalt, Eisen, Palladium, Platin, Rhodium und Iridium ausgewählt wird, die in Wasser löslich oder fähig sind, unter den Bedingungen der Reaktion in Lösung zu gehen.

13. Verfahren nach einem der Ansprüche 1 bis 12, dadurch gekennzeichnet, daß die Verbindung des Übergangsmetalles unter den Verbindungen von Nickel wie den Carboxylaten, insbesondere Acetat, Formiat, Citrat von Nickel, Nickelcarbonat, Nickelbicarbonat, Nickelborat, Nickelbromid, Nickelchlorid, Nickeliodid, Nickelthiocyanat, Nickelcyanid, Nickelhydroxid, Nickelhydrophosphit, Nickelphosphit, Nickelphosphat und seinen Derivaten, Nickelnitrat, Nickelsulfat, Nickelsulfit sowie den Aryl- und Alkylsulfonaten von Nickel ausgewählt wird.

14. Verfahren nach einem der Ansprüche 1 bis 13, dadurch gekennzeichnet, daß im Kathodenraum die Ausgangskonzentration an sulfoniertem Phosphin zwischen 10⁻³ Mol/Liter und 1 Mol/Liter und die Ausgangskonzentration an Übergangsmetall-Verbindung, insbesondere an Nickelverbindung, zwischen 10⁻⁵ Mol/Liter und 1 Mol/Liter betragen.

15. Verfahren nach einem der Ansprüche 1 bis 14, dadurch gekennzeichnet, daß der Kathodenraum noch andere Verbindungen umfaßt, die es ermöglichen, die Leitfähigkeit des Elektrolyten zu erhöhen, wie lösliche Salze, komplexbildende Mittel, die fähig sind, das Potential zu modifizieren, bei dem die Reduktion des Übergangsmetalles durchgeführt wird, wie Cyanide und Lewis-Säuren.

16. Verfahren nach Anspruch 15, dadurch gekennzeichnet, daß die in dem Kathodenraum eingesetzte Lewis-Säure unter den Verbindungen der Elemente der Gruppen Ib, IIb, IIIa, IIIb, IVa, IVb, Va, Vb, VIb, VIIb und VIII des Periodensystems der Elemente in dem Maße ausgewählt wird, wo die genannte Verbindung mindestens teilweise in Wasser oder allgemeiner, in der durch Elektrolyse zu behandelnden wäßrigen Lösung löslich und stabil ist, und vorzugsweise unter den Salzen, insbesondere den Halogeniden, vorzugsweise den Chloriden und Bromiden, den Sulfaten, den Nitraten, den Sulfonaten, insbesondere den Trifluormethansulfonaten, den Carboxylaten, den Acetylacetonaten, den Tetrafluorboraten und den Phosphaten.

17. Verfahren nach einem der Ansprüche 15 oder 16, dadurch gekennzeichnet, daß die Lewis-Säure unter Zinkchlorid, Zinkbromid, Zinkiodid, Zink-trifluormethansulfonat, Zinkacetat, Zinknitrat, Zink-tetrafluorborat, Manganchlorid, Manganbromid, Nickelchlorid, Nickelbromid, Nickelcyanid, Nickelacetylacetonat, Cadmiumchlorid, Cadmiumbromid, Zinn(II)-chlorid, Zinn(II)-bromid, Zinn(II)-sulfat, Zinn(II)-tartrat, den Chloriden, Bromiden, Sulfaten, Nitraten, Carboxylaten oder Trifluormethansulfonaten der Elemente der seltenen Erden wie Lanthan, Cer, Praseodym, Neodym, Samarium, Europium, Gadolinium, Terbium, Dysprosium, Holmium, Erbium, Thulium, Ytterbium und Lutetium, Cobaltchlorid, Eisen(II)-chlorid und Yttriumchlorid ausgewählt wird.

18. Verfahren nach einem der Ansprüche 15 bis 17, dadurch gekennzeichnet, daß die Lewis-Säure unter Zinkchlorid, Zinkbromid, Zinksulfat, Zink-tetrafluorborat, Zinn(II)-chlorid, Zinn(II)-bromid, den Mischungen von Zinkchlorid und Zinn(II)-chlorid, Nickelchlorid, Nickelbromid und Nickel-acetylacetonat ausgewählt wird.

19. Verfahren nach einem der Ansprüche 15 bis 18, dadurch gekennzeichnet, daß die Lewis-Säure 0 bis 50 Mol pro Mol der Übergangsmetallverbindung, insbesondere der Nickelverbindung, und vorzugsweise 0 bis 10 Mol pro Mol darstellt.

20. Verfahren nach einem der Ansprüche 1 bis 19, dadurch gekennzeichnet, daß der Anodenraum eine wäßrige Lösung eines Anolyten enthält, bestehend aus einer Säure wie insbesondere Schwefelsäure, Salpetersäure, in Wasser löslichen Carbonsäuren wie Essigsäure, aus den entsprechenden Salzen wie von Natrium, Kalium, Ammonium oder quaternärem Ammonium, oder aus einer Base wie Natriumhydroxid oder Kaliumhydroxid, wobei der Anolyt vorzugsweise unter Schwefelsäure und ihren Salzen ausgewählt wird.

21. Verfahren nach einem der Ansprüche 1 bis 19, dadurch gekennzeichnet, daß der Anodenraum eine wäßrige Lösung eines Anolyten enthält, bestehend aus einem oder mehreren sulfonierten Phosphinen.

22. Verfahren nach einem der Ansprüche 1 bis 21, dadurch gekennzeichnet, daß die Ausgangskonzentration des Anolyten in der Lösung des Anodenraumes 10⁻² Mol/Liter bis 3 Mol/Liter beträgt.

23. Verfahren nach einem der Ansprüche 1 bis 22, dadurch gekennzeichnet, daß es darin besteht, in dem Kathodenraum eine wäßrige Lösung eines gebrauchten Katalysators auf der Basis von sulfoniertem Phosphin und Übergangsmetall, ganz besonders Nickel, das mindestens teilweise in Cyanid überführt ist, einzusetzen, wobei der genannte gebrauchte Katalysator außerdem gegebenenfalls eine oder mehrere Lewis-Säuren enthält und die genannte Lösung relativ geringe Mengen von Verbindungen wie Butadien und/oder die Pentennitrile, oder wie Adiponitril, Methyl-glutaronitril, Ethyl-succinonitril, Methylbuten-nitrile enthalten kann.
